# FASCICULE DE BREVET EUROPEEN

(11) **EP 0 839 335 B1**
(45) Date de publication et mention de la délivrance du brevet: **08.09.1999**
(21) Numéro de dépôt: 96914264.5
(22) Date de dépôt: 30.04.1996
(51) Int. Cl.: G02B 6/44, G02B 6/16, C09B 69/10

(54) **FIBRE OPTIQUE ET RUBAN DE FIBRES OPTIQUES, ET PROCEDE DE FABRICATION ASSOCIE**
OPTISCHE FASER UND OPTISCHES FASERBAND MIT ZUGEHOERIGEM HERSTELLUNGSVERFAHREN
OPTICAL FIBRE AND OPTICAL FIBRE TAPE, AND METHOD FOR MAKING SAME

(30) Priorité: 03.05.1995 FR 9505269
(43) Date de publication de la demande: 06.05.1998
(73) Titulaire: ALCATEL, 75008 Paris (FR)
(72) Inventeur: McNUTT, Christopher, Hickory, NC 28602 (US)
(74) Mandataire: Feray, Valérie
(86) Numéro de dépôt international: FR9600656
(87) Numéro de publication internationale: WO9635135

(56) Documents cités:
- EP-A- 0 545 235
- WO-A-94/16127
- WO-A-95/00576
- DE-C- 4 201 376
- US-A- 3 435 003
- US-A- 3 678 016
- US-A- 3 872 057
- PATENT ABSTRACTS OF JAPAN vol. 11, no. 267 (C-443) 28 Août 1987 & JP,A,62 068 809 (NTTC) 28 Mars 1987

## Description

La présente invention concerne une fibre optique, un ruban de fibres optiques et un procédé de fabrication de ces derniers.

De manière bien connue, une fibre optique est destinée à transmettre des ondes lumineuses et est constituée d'un coeur optique, en un matériau à base de silice, entouré d'une gaine optique, également en un matériau à base de silice. Le coeur optique est destiné à assurer le guidage de la majorité des ondes lumineuses transmises par la fibre optique. Ces deux éléments (coeur et gaine optiques) constituent la partie optique de la fibre, appelée fibre optique nue. Cette partie est très sensible aux perturbations extérieures, ces dernières pouvant entraîner une détérioration de ses propriétés de transmission, et donc un fonctionnement dégradé de la fibre optique.

Afin de protéger la fibre nue contre ces perturbations extérieures, il est bien connu de revêtir la gaine optique d'une couche de protection en un matériau plastique, appelée revêtement pnmaire. Au-dessus de ce revêtement primaire, on peut trouver éventuellement d'autres couches de protection, et plus particulièrement une deuxième couche de protection appelée revêtement secondaire, ainsi qu'une couche d'identification le plus souvent colorée.

La solution utilisée actuellement pour réaliser les couches de protection consiste à revêtir la gaine optique d'une résine thermodurcissable (c'est-à-dire qui durcit, en se réticulant, par chauffage), par exemple d'une résine réticulable sous l'effet d'un rayonnement ultraviolet. Le rayonnement ultraviolet sert à apporter la chaleur nécessaire à la réaction de réticulation (en pratique. une température de l'ordre de 200°C est nécessaire à la réticulation).

De manière connue également, un ruban de fibres optiques est un assemblage d'une pluralité de fibres optiques nues ou revêtues d'une ou plusieurs couches de protection ou d'identification, disposées côte à côte et parallèlement les unes aux autres sensiblement dans un même plan, ces fibres étant maintenues ensemble au moyen d'une matrice commune en un matériau plastique, qui joue un rôle de protection des fibres à l'encontre des perturbations extérieures. Cette matrice commune est constituée d'une résine thermodurcissable, par exemple d'une résine réticulable sous l'effet d'un rayonnement ultraviolet.

Afin de revêtir une fibre optique d'une couche de revêtement de résine thermodurcissable, ou bien de réaliser au moyen d'une telle résine la matrice de protection d'un ruban de fibres optiques, on fait défiler le corps à traiter (fibre ou assemblage de fibres) dans une filière d'enduction contenant la résine non réticulée, et par conséquent fluide, puis ensuite dans un dispositif permettant de lui fournir l'énergie nécessaire (sous forme de chaleur) pour effectuer la réticulation.

Un tel dispositif doit comprendre des moyens de chauffage complexes, et notamment, dans le cas d'une résine réticulable sous l'effet d'un rayonnement ultraviolet, des lampes à ultraviolets associées à des réflecteurs adaptés afin de focaliser le rayonnement sur le corps à traiter. De plus, il est nécessaire de prévoir dans ce demier cas des moyens empêchant le rayonnement infrarouge, émis conjointement au rayonnement ultraviolet, de parvenir jusqu'au corps à traiter, ce rayonnement infrarouge risquant de chauffer de manière excessive ce corps et ainsi d'en dégrader les propriétés mécaniques et optiques.

Ces dispositifs sont complexes et par conséquent assez onéreux.

De plus, ils demandent un entretien permanent qui lui aussi est coûteux.

Le but de la présente invention est donc de mettre au point une fibre optique et un ruban de fibres optiques dont la fabrication n'exige pas l'utilisation d'un matériel onéreux par lui-même et par son entretien.

La présente invention propose à cet effet une fibre optique comprenant un coeur optique, pour guider la majorité des ondes lumineuses transmises par ladite fibre, entouré d'une gaine optique. elle-même entourée d'un revêtement de protection en un matériau plastique,
caractérisée en ce que ledit matériau plastique est un matériau à réticulation thermiquement réversible.

La présente invention propose également un ruban de fibres optiques comprenant une pluralité de fibres optiques disposées côte à côte et parallèlement les unes aux autres sensiblement dans un même plan, et noyées à l'intérieur d'une matrice commune de protection en un matériau plastique,
caractérisé en ce que ledit matériau plastique est un matériau à réticulation thermiquement réversible.

La présente invention propose en outre un procédé de fabrication d'une telle fibre ou d'un tel ruban, tel que défini à la revendication 8.

Les matériaux à réticulation réversible, dits aussi matériaux "thermofluides" (ou "thermoflow" en anglais) ont une viscosité très faible au-delà d'une température dite de transition, pouvant être comprise entre 50 et 300°C par exemple, c'est-à-dire qu'ils sont fluides au-delà de cette température. Plus précisément, leur structure chimique se "dé-réticule" à cette température (rupture des liaisons chimiques), et revient à l'état réticulé (rétablissement des liaisons chimiques) par simple refroidissement progressif depuis la température de transition jusqu'à une température en général inférieure de 50°C environ à la température de transition. Cette réaction est réversible, c'est-à-dire qu'elle peut être effectuée dans un sens et dans l'autre (dé-réticulation puis réticulation et vice-versa). Les propriétés physiques, et notamment mécaniques, de ces matériaux à l'état réticulé sont très bonnes : elles sont comparables à celles des matériaux thermodurcissables à l'état réticulé, c'est-à-dire qu'elles conviennent tout à fait à une utilisation des matériaux à réticulation réversible au niveau des couches de protection de fibres optiques ou des matrices de rubans de fibres optiques.

Des exemples de matériaux à réticulation réversible sont donnés dans le document WO 95/00576, dont le contenu est incorporé par référence. Les matériaux décrits dans ce document ont une température de transition comprise entre 50 et 300°C.

Une amplitude de 50°C environ est nécessaire pour observer un changement de viscosité d'un facteur 100, c'est-à-dire une fluidisation quasi-totale ou un durcissement quasi-complet, selon le sens de la réaction.

D'autres exemples de ces matériaux sont décrits notamment, mais de manière non-limitative dans les documents US-3 435 003, US-3 678 016 et US-3 872 057.

Grâce aux propriétés qui viennent d'être évoquées, les matériaux à réticulation réversible, du fait de leur fluidité aux températures supérieures à la température de transition, peuvent être aisément mis en oeuvre à ces températures, ce qui permet de les utiliser à ces températures pour revêtir des fibres optiques individuelles ou assemblées en ruban, et ce par exemple au moyen d'une filière d'enduction classique.

Leur réticulation se produit ensuite par simple refroidissement, ce qui évite d'avoir à utiliser les dispositifs complexes employés habituellement pour effectuer la réticulation. Le refroidissement peut être effectué par exemple à l'aide d'un système de refroidissement classique, ou en laissant le corps traité à température ambiante, ou encore en le faisant défiler dans un bain d'eau.

Ainsi, les procédés et dispositifs pour la mise en oeuvre de l'invention sont très simples et moins onéreux que ceux de l'art antérieur.

Enfin, la réversibilité de la réaction de réticulation, qui n'existe pas avec les matériaux thermodurcissables, ainsi que la fluidité aux températures supérieures à la température de transition des matériaux à réticulation réversible (qui leur confère à ces températures des propriétés mécaniques similaires à celles des matériaux thermoplastiques) permettent le dégainage aisé de la fibre optique ou du ruban à ces températures.

D'autres caractéristiques et avantages de la présente invention apparaîtront dans la description suivante d'une fibre optique et d'un ruban de fibres optiques selon la présente invention, ainsi que d'un procédé pour les réaliser.

Dans les figures suivantes :
- la figure 1 montre la viscosité en fonction de la température pour un matériau thermoplastique, un matériau thermodurcissable et un matériau à réticulation réversible,
- la figure 2 représente en coupe transversale une fibre optique selon l'invention,
- la figure 3 représente en coupe transversale un ruban de fibres optiques selon l'invention,
- la figure 4 représente de manière très schématique un dispositif pour la fabrication d'une fibre ou d'un ruban selon l'invention.

Dans toutes ces figures, les éléments communs portent les mêmes numéros de référence.

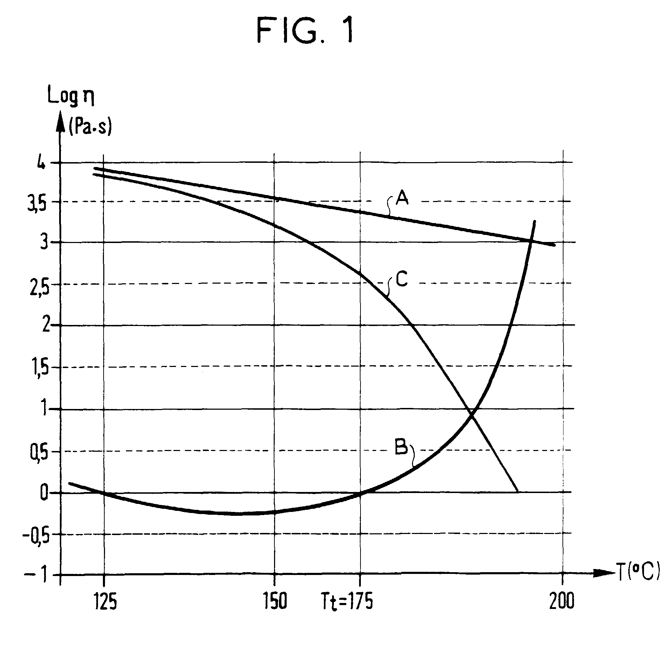

A la figure 1 :
- la courbe A montre la viscosité Log η d'un matériau thermoplastique en fonction de la température T,
- la courbe B montre la viscosité Log η d'un matériau thermodurcissable en fonction de la température T,
- la courbe C montre la viscosité Log η d'un matériau à réticulation réversible en fonction de la température T.

La figure 1 permet de comparer le comportement d'un matériau à réticulation réversible à celui des matériaux thermodurcissables, tels que les résines habituellement utilisées pour revêtir les fibres optiques, et à celui des matériaux thermoplastiques.

On voit que les matériaux à réticulation réversible (Courbe C) ont une viscosité qui diminue fortement à partir d'une température de transition Tₜ (de l'ordre de 175°C dans l'exemple montré sur la figure), de sorte qu'ils sont fluides au-delà de cette température. En-dessous de cette température, ils ont une viscosité élevée, c'est-à-dire qu'ils sont réticulés et donc durs.

Pour les matériaux thermodurcissables (Courbe B), le phénomène est exactement inverse. De plus, la réaction n'est pas réversible, de sorte qu'une fois durcis. il est impossible de les ramener à l'état fluide par augmentation de la température.

Les matériaux thermoplastiques (Courbe A), tels que par exemple le polyéthylène ou le polypropylène, pour lesquels la mise en forme ne met pas en jeu de réticulation, ont une viscosité qui diminue lorsque la température augmente. Leur mise en oeuvre se fait par extrusion, ce qui demande un équipement complexe, et de plus, elle nécessite des températures très élevées, rendant impossible leur utilisation avec des fibres optiques ou des rubans de fibres optiques, car de telles températures risqueraient d'entraîner une dégradation de leurs performances optiques.

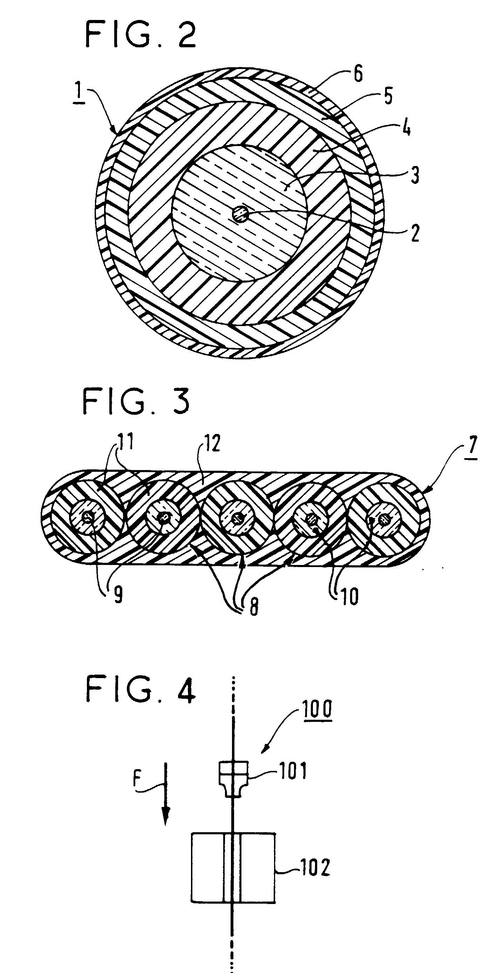

On voit en figure 2 une fibre optique 1 selon l'invention, de diamètre extérieur voisin de 250 µm, comprenant, disposés coaxialement de l'intérieur vers l'extérieur :
- un coeur optique 2 en un matériau à base de silice,
- une gaine optique 3 en un matériau à base de silice,
- un revêtement primaire 4 en un matériau à réticulation réversible,
- un revêtement secondaire 5 également en un matériau à réticulation réversible,
- une couche d'identification colorée 6 encore en un matériau à réticulation réversible.

Selon l'invention, on peut réaliser n'importe quelle couche de protection (revêtement primaire, revêtement secondaire ou autres) ou d'identification en un matériau à réticulation réversible.

Plus particulièrement, le matériau à réticulation réversible utilisé pour les couches de protection 4 et 5 est choisi parmi les matériaux décrits dans le document WO 95/00576 ayant de préférence une température de transition (température de fusion) de l'ordre de 70°C. Ces matériaux sont produits par la réaction d'un polyimide non linéaire ayant une fonction imide d'au moins trois et d'une polyamine comprenant au moins deux fonctions amines primaires ou secondaires.

Une température de transition choisie voisine de 70°C permet d'assurer que le câble dans lequel seront utilisés les fibres ou rubans selon l'invention pourra supporter en service des températures allant jusqu'à 70°C, ce qui est une exigence classique pour les câbles de télécommunications.

D'autre part, il est préférable que la température de transition soit la plus faible possible au-dessus de la valeur préférée mentionnée ci-dessus, de manière à simplifier au maximum l'équipement nécessaire pour le chauffage du matériau à réticulation réversible utilisé.

D'autres matériaux à réticulation réversible connus, ayant les propriétés mécaniques requises pour une application aux fibres optiques ou aux rubans de fibres optiques peuvent être utilisés. La séléction des matériaux à réticulation réversible adéquats à cette application parmi tous les matériaux à réticulation réversible connus est à la portée de l'homme de l'art, qui peut les déterminer par de simples opérations de routine.

Il en est de même pour le choix du matériau à réticulation réversible de la couche d'identification 6.

La figure 3 montre un ruban 7 de fibres optiques selon l'invention. Le ruban 7 comprend cinq fibres optiques 8 comportant chacune un coeur optique 9 en un matériau à base de silice, entouré d'une gaine optique 10 également en un matériau à base de silice, elle-même entourée d'un revêtement primaire 11 en un matériau à réticulation réversible, par exemple tel que ceux mentionnés pour les couches 4 et 5 de la fibre de la figure 2, selon l'invention.

Les cinq fibres optiques 8 sont disposées côte à côte et parallèlement les unes aux autres, sensiblement dans un même plan, et noyées dans une matrice de protection commune 12 en un matériau à réticulation réversible.

Plus particulièrement, le matériau à réticulation réversible utilisé pour la matrice de protection commune 12 est choisi parmi les matériaux décrits dans le document WO 95/00576 ayant une température de transition (température de fusion) voisine de 70°C. Ces matériaux sont produits par la réaction d'un polyimide non linéaire ayant une fonction imide d'au moins trois et d'une polyamine comprenant au moins deux fonctions amines primaires ou secondaires.

Ici encore, la température de transition est de préférence voisine de 70°C, pour les raisons mentionnées plus haut.

La sélection des matériaux à réticulation réversible convenables est également à la portée de l'homme de l'art.

On a représenté de manière très schématique en figure 4 un dispositif 100 permettant de réaliser par exemple les revêtements primaire 4 ou secondaire 5 de la fibre optique 1, ou encore la couche d'identification 6 de cette dernière.

Ce dispositif 100 peut permettre de réaliser également le revêtement primaire 11 des fibres optiques 8 ainsi que la matrice 12 du ruban 7.

Le dispositif 100 comprend une filière d'enduction 101 contenant le matériau à réticulation réversible à l'état fluide, à une température supérieure à 70°C. La filière d'enduction 101 est suivie, dans le sens de défilement, représenté par la flèche F, du corps à traiter, par exemple une fibre optique non revêtue, d'un système de refroidissement à air 102 de tout type connu, permettant de ramener le corps à traiter à la température ambiante.

Ainsi, la fibre non revêtue traverse d'abord la filière d'enduction 101, en sortie de laquelle elle est revêtue d'un revêtement non réticulé de matériau à réticulation réversible, puis le système de refroidissement en sortie duquel ce revêtement est réticulé.

On peut bien entendu utiliser le dispositif 100 pour réaliser n'importe quel revêtement en un matériau à réticulation réversible selon la présente invention.

Bien entendu, la présente invention n'est pas limitée aux modes de réalisation qui viennent d'être décrits.

En premier lieu, on peut réaliser selon l'invention un ou plusieurs des revêtements ou couches mentionnés plus haut (revêtements primaire ou secondaire, couche d'identification colorée) au sein d'une même fibre optique ou d'un même ruban. On rappelle qu'il n'est pas nécessaire que les couches de protection soient transparentes.

Par ailleurs, dans un ruban selon l'invention, les fibres optiques peuvent être nues, ou protégées par un revêtement primaire, et éventuellement recouvertes d'une couche d'identification colorée, sans que cela soit essentiel.

Cette couche d'identification colorée peut être constituée d'un matériau à réticulation réversible auquel aura été ajouté le pigment nécessaire, le cas échéant.

Bien évidemment, certaines des couches mentionnées ci-dessus peuvent être en un matériau à réticulation réversible, alors que les autres ne le sont pas. Il faut toutefois prendre garde à ne revêtir, lorsque cela est nécessairen, une couche en un matériau à réticulation réversible que par des couches en matériaux ne nécessitant pas une mise en oeuvre à une température à la température de transition du matériau à réticulation réversible considéré.

## Revendications

1. Fibre optique comprenant un coeur optique (2), pour guider la majorité des ondes lumineuses transmises par ladite fibre, entouré d'une gaine optique (3), elle-même entourée d'un revêtement de protection en un matériau plastique (4),
caractérisée en ce que ledit matériau plastique (4) est un matériau à réticulation thermiquement réversible.

2. Fibre selon la revendication 1 caractérisée en ce que ledit matériau (4) a une température de transition voisine de 70°C.

3. Fibre selon l'une des revendications 1 ou 2 caractérisée en ce que ledit matériau (4) est obtenable par réaction d'un polyimide non linéaire ayant une fonction imide d'au moins trois et d'une polyamine comprenant au moins deux fonctions amines primaires ou secondaires.

4. Ruban de fibres optiques (7) comprenant une pluralité de fibres optiques (10) disposées côte à côte et parallèlement les unes aux autres sensiblement dans un même plan, et noyées à l'intérieur d'une matrice commune de protection (12) en un matériau plastique,
caractérisé en ce que ledit matériau plastique (12) est un matériau à réticulation thermiquement réversible.

5. Ruban selon la revendication 4 caractérisé en ce que ledit matériau (12) a une température de transition voisine de 70°C.

6. Ruban selon l'une des revendications 4 ou 5 caractérisé en ce que ledit matériau (12) est obtenable par réaction d'un polyimide non linéaire ayant une fonction imide d'au moins trois et d'une polyamine comprenant au moins deux fonctions amines primaires ou secondaires.

7. Fibre ou ruban selon l'une des revendications 1 à 6 caractérisé en ce que la ou les fibres (10) sont revêtues d'une couche d'identification en un matériau à réticulation réversible.

8. Procédé de fabrication d'une fibre ou d'un ruban selon l'une des revendications 1 à 7, comprenant une étape de dépôt dudit matériau plastique constituant ledit revêtement ou ladite matrice commune de protection,
caractérisé en ce que ladite étape de dépôt est effectuée à une température supérieure à 70°C, à laquelle ledit matériau est fluide, la réticulation dudit revêtement étant effectuée par refroidissement à une température voisine de la température ambiante.

## Patentansprüche

1. Optische Faser, die einen optischen Kern (2) zum Leiten der Mehrheit der von der Faser übertragenen Lichtwellen umfaßt, der von einem optischen Mantel (3) umgeben ist, der wiederum von einer Schutzummantelung aus einem Kunststoffmaterial (4) umgeben ist, dadurch gekennzeichnet, daß das Kunststoffmaterial (4) ein Material mit thermisch reversibler Vernetzung ist.

2. Faser nach Anspruch 1, dadurch gekennzeichnet, daß das Material (4) eine Übergangstemperatur nahe bei 70°C hat.

3. Faser nach einem der Ansprüche 1 oder 2, dadurch gekennzeichnet, daß das Material (4) durch Reaktion eines nichtlinearen Polyimids, das eine Imidfunktion von wenigstens drei aufweist, und eines Polyamins erhalten werden kann, das wenigstens zwei primäre oder sekundäre Aminfunktionen umfaßt.

4. Band (7) aus optischen Fasern, das eine Vielzahl von optischen Fasern (10) umfaßt, die im wesentlichen in derselben Ebene nebeneinander und zueinander parallel angeordnet sind und im Inneren einer gemeinsamen Schutzmatrize (12) aus einem Kunststoffmaterial versenkt sind, dadurch gekennzeichnet, daß das Kunststoffmaterial (12) ein Material mit thermisch reversibler Vernetzung ist.

5. Band nach Anspruch 4, dadurch gekennzeichnet, daß das Material (12) eine Übergangstemperatur nahe bei 70°C hat.

6. Band nach einem der Ansprüche 4 oder 5, dadurch gekennzeichnet, daß das Material (12) durch Reaktion eines nichtlinearen Polyimids, das eine Imidfunktion von wenigstens drei aufweist, und eines Polyamins erhalten werden kann, das wenigstens zwei primäre oder sekundäre Aminfunktionen umfaßt.

7. Faser oder Band nach einem der Ansprüche 1 bis 6, dadurch gekennzeichnet, daß die Faser oder Fasern (10) mit einer Kennzeichnungsschicht aus einem Material mit reversibler Vernetzung umhüllt sind.

8. Verfahren zur Herstellung einer Faser oder eines Bandes nach einem der Ansprüche 1 bis 7, das einen Schritt der Niederlegung des Kunststoffmaterials, das die Umhüllung oder die gemeinsame Schutzmatrize bildet, umfaßt, dadurch gekennzeichnet, daß der Schritt der Niederlegung bei einer Temperatur über 70°C ausgeführt wird, bei welcher das Material flüssig ist, wobei die Vernetzung der Umhüllung durch Abkühlung auf eine Temperatur nahe der Umgebungstemperatur erfolgt.

## Claims

1. An optical fiber comprising an optical core (2) for guiding the majority of lightwaves transmitted by said fiber, the core being surrounded by optical cladding (3), itself surrounded by a protective covering of plastics material (4), the fiber being characterized in that said plastics material (4) is a thermally reversible cross-linked material.

2. A fiber according to claim 1, characterized in that said material (4) has a transition temperature close to 70°C.

3. A fiber according to claim 1 or 2, characterized in that said material (4) is obtainable by reacting a non-linear polyimide having imide functionality of at least three with a polyamine comprising at least two primary or secondary amino functions.

4. An optical fiber ribbon (7) comprising a plurality of optical fibers (10) disposed side by side and parallel to one another, substantially in a common plane, the fibers being embedded in a common protective matrix (12) of a plastics material, the ribbon being characterized in that said plastics material (12) is a thermally reversible cross-linked material.

5. A ribbon according to claim 4, characterized in that said material (12) has a transition temperature close to 70°C.

6. A ribbon according to claim 4 or 5, characterized in that said material (12) is obtainable by reacting a non-linear polyimide having imide functionality of at least three with a polyamine comprising at least two primary or secondary amino functions.

7. A fiber or ribbon according to any one of claims 1 to 6, characterized in that the fibers (10) are covered in an identification layer of a reversibly cross-linked material.

8. A method of manufacturing a fiber or a ribbon according to any one of claims 1 to 7, the method including a step of depositing said plastics material constituting said covering or said common protective matrix, and being characterized in that said deposition step is performed at a temperature greater than 70°C, at which temperature said material is fluid, cross-linking of said covering being performed by cooling to a temperature close to ambient temperature.
